# EUROPEAN PATENT SPECIFICATION

(11) **EP 0 727 136 B1**
(45) Date of publication and mention of the grant of the patent: **19.09.2001**
(21) Application number: 96200437.0
(22) Date of filing: 20.02.1996
(51) Int. Cl.: A01G 9/02, A01G 9/04

(54) **Article having a flange protruding therefrom**
Gegenstand mit einem herausragenden Flansch
Objet pourvu d'un rebord saillant

(30) Priority: 20.02.1995 NL 9500321
(43) Date of publication of application: 21.08.1996
(73) Proprietor: HELI PLASTIC B.V., 2461 GJ Ter Aar (NL)
(72) Inventor: van Tol, Hendrikus Wouterus Jozef, 2461 SN Langeraar (NL)
(74) Representative: de Bruijn, Leendert C.

(56) References cited:
- EP-A- 0 127 704
- EP-A- 0 352 379
- EP-A- 0 381 023
- EP-A- 0 546 950
- FR-A- 2 716 070
- GB-A- 858 887
- LU-A- 59 656
- US-A- 4 891 905

## Description

The invention relates to an article having a flange around at least part of its periphery in a first, curled position, for example the outer edge of the collection tray or the top edge of a plant pot, wherein said flange is joined to the article in such a way that said flange can be brought into a second free equilibrium position on the article. More particularly, the invention relates to a plant or flower pot having a water collection tray located at the base. However, the invention is not restricted to this. For example, the invention is also applicable to the outward-facing collar section around the top edge of, likewise, a flower or plant pot. In addition, the invention of course relates to articles other than flower or plant pots and said articles can be either hollow or solid.

Curled flanges protruding from an article are, for example, inconvenient to produce by injection moulding manufacture and the region between the flange and the article is frequently difficult to reach for, for example, cleaning purposes. It is for these reasons that a flange of this type, for example as an integral part of a water collection dish at the base of a pot, is manufactured as a separate part easy to detach from the article. However, for manufacturing this means that two separate parts first have to be produced which then have to be assembled. This involves relatively high investment and a great deal of time. Moreover, the flange can be lost once it has been detached from the article.

From EP-A-0 381 023 a flowerpot is known having a flange which forms a saucer that can assume two free equilibrium positions. The one equilibrium position in order, for example, to function as an upright outer edge of a water collection tray, and the other position for easier manufacture and better access to the region between the flange and the article, whilst the flange can constitute an integral component of the article. However, it is still possible to keep the flange separate from the article and to join it to the article such that it is easily detachable. However, it is then no longer necessary to detach the flange from the article in order to make the region between the article and the flange more easily accessible. A further advantage can be achieved in that the article can be given two different appearances with the flange in the one or in the other free equilibrium position. By this means it could also be possible for the article itself to be usable in two use positions; for example an upright position and an upside down position. It is not necessary for the flange to protrude from the outside of the article; instead in the case of a hollow article the flange could also protrude inwards.

In the known flowerpots, the saucer may, due to tensional forces arising during reversing of the orientation of the saucer, may have an undulating shape. The aim of the present invention is to provide an article having a curled protruding flange which can be produced at lower cost and in less time, for example by injection moulding manufacture, it being possible to make the region between the article and the flange more accessible, for example for cleaning, during use of the article and there being less risk of the flange being lost. It is a further object of the present invention to provide an article having a flange of which the shape and the position of its free edge, upon reversal of its orientation, can be clearly defined. Thereto an article, according to the present invention, is characterised in that said flange in said first curled position bears on its inside against a support element protruding from the article.

Especially in the case of relatively large dimensions of the flange, it has been found that a straight, non-undulating appearance of the flange in at least one of the two free equilibrium positions can be effectively obtained by having the flange bear on its inside against the bearing element protruding from the article. In this way the free top edge of the flange is elastically held under pre-tension, so that folds and undulations are given as little chance as possible to form. To achieve the best possible elastic pretensioning of the flange while minimising the material consumption, it is preferable in this context for the bearing element to be located nearer to that edge of the flange which is joined to the article. Preferably, the bearing element bears against the flange at a distance which amounts to approximately ¼ to ¹/₃ of the width of the flange, measured from that edge of the flange which is joined to the article. Moreover, in connection with use in the water collection tray on, preferably, the underside of the pot, the effective volume of the water collection tray is adversely affected as little as possible with said advantageous positioning of the bearing element.

So that the flange can also be moved a large number of times from the one free equilibrium position into the other free equilibrium position, and vice versa, reliably, without the material giving way and without giving rise to permanent deformation therein, it is preferable that the flange is joined to the article via a, preferably attenuated, bridge section, which bridge section defines a hinge connection.

Advantageously, in one of the two free equilibrium positions of the flange said bridge section defines an essentially right angle therewith. In connection with application on the water collection tray at the base of a pot, this implies that said bridge section runs obliquely outwards and downwards from the base of the pot with respect to the central axis of the pot. With this arrangement, said bridge section makes an angle of approximately 15° to 60° with said central axis.

It will be clear that not only the flange but also the article can assume various shapes matched to one another, for example essentially circular or elliptical, but also triangular, rectangular or polygonal, for example hexagonal or octagonal. Furthermore, it will be clear to a person skilled in the art how, by means of calculations and trials, to arrive at the suitable combination of wall thickness for the flange and the optional bridge section and the suitable material properties (elastic limit, elongation at break, visco-elastic behaviour, etc.) to enable the flange to be brought from the one free equilibrium position into the other free equilibrium position without, or essentially without, permanent (plastic) deformation or splitting. The use of injection mouldable polypropylene has proved suitable.

The invention is explained in more detail below with the aid of a non-limiting illustrative embodiment with reference to the appended drawing. In the drawing:
Figure 1 shows a cross-sectional side view of a base detail of a flower pot which has a water collection tray at its base, with the flange or tray edge being shown in its first free equilibrium position; and
Figure 2 shows the view corresponding to Figure 1 with the flange or tray edge shown in its second free equilibrium position.

The drawings show a base detail of a pot 1, which is circular when viewed from the top. The water collection tray 3 is located some distance below the bottom edge 9 of the pot 1. The water collection tray 3 also defines the base of the pot 1. However, it is also possible to place a "floating", optionally perforated, base (not visible), running across the lower edge 2, in the pot 1 above the tray 3. The water collection tray 3 is joined by lip-shaped spacers 4 to the bottom edge 9. Openings or holes are present in or between said spacers 4 to allow water to flow through freely. At the outer edge of the circular water collection tray 3 there is a bearing lip 5, which extends all round. Said bearing lip 5 runs at a slight upward slope, preferably at an angle of about 5°, with respect to the water collection tray 3, which is otherwise flat. A flange 7, which likewise runs all round, is also joined to the water collection tray 3 via a relatively thin bridge section 6. By means of the bridge section 6, the flange 7 is hingeably joined to the water collection tray 3. As is shown, the bridge section 6 is made at least 50 % thinner than the flange 7. The bridge section 6 runs from the water collection tray 3 obliquely outwards and downwards with respect to the central axis 8 of the pot 1. The bridge section 6 is affixed to the water collection tray 3 at a position 10 which is located diametrically offset somewhat inwards with respect to the bottom edge 9 or the transition between the optional "floating" base and the upright wall 11 of the pot 1.

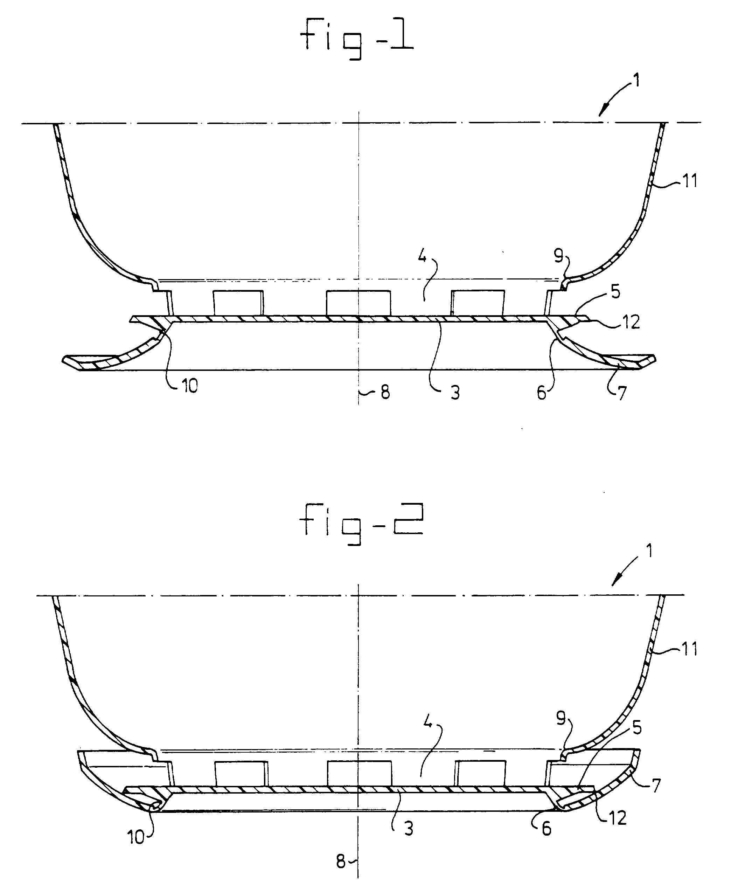

As is shown, the flange 7 can be moved resiliently and elastically between two free equilibrium positions. In the use position of the pot 1 (Figure 2), the inside of the flange 7 then bears firmly against the lip 5, so that the free top edge of the flange 7 is preferably held elastically under tension. The point 12 where the lip 5 bears against the flange 7 is located nearer to the place where the flange 7 is affixed to the bridge 6. Furthermore, in this position the flange 7 and the bridge section 6 enclose an approximate right angle.

In a currently advantageous embodiment, the point 10 defines a diameter of 64 mm and the point 9 defines a diameter of 66 mm, the bridge section 6 is 0.3 mm thick, the flange 7 is 0.7 mm thick, the curve radius of the flange 7 is approximately 15 mm and the mid point of said curve radius is located at a diameter of 96 mm, 2.5 mm above the underside of the tray 3 and, in the position shown in Figure 2, the free top of the flange 7 is at the same height as the bottom edge 9 of the pot 1, which bottom edge 9 is located approximately 6.5 mm above the underside of the tray 3.

## Claims

1. Article (1) having a flange (7) extending around at least part of its periphery in a first, curled position, for example the outer edge of the collection tray or the top edge of a plant pot, wherein said flange (7) is joined to the article in such a way that said flange can be brought into a second free equilibrium position on the article, **characterised in that** said flange (7) in said first curled position bears on its inside against a support element (5) protruding from the article.

2. Article (1) according to claim 1, wherein said flange (7) bears against the support element (5) in a region which is located halfway between the free edge and that edge of the flange which is joined to the article, or in a region nearer to that edge of the flange which is joined to the article.

3. Article according to Claim 1 or 2, wherein the flange (7) is joined to the article via a component (6) of smaller thickness, preferably of at most half the thickness of the flange (7).

4. Article (1) according to one of the preceding claims, wherein the flange (7) is hingeably joined to the article.

5. Article (1) according to one of the preceding claims, wherein the flange (7) is joined to the article by a plate element, which likewise protrudes from the article and which, when the flange is in the first position, encloses essentially a right angle therewith.

6. Article (1) according to one of the preceding claims, wherein the flange (7) and optionally also the article is of essentially elliptical, circular, triangular, rectangular or polygonal shape.

7. Article (1) according to one of the preceding claims, wherein the flange (7) has a curled shape in both the first and the second position.

## Patentansprüche

1. Gegenstand (1) mit einem um mindestens einen Teil seines Umfangs verlaufenden Flansch (7) in einer ersten umgebogenen Stellung, z.B. dem äußeren Rand der Auffangschale oder dem oberen Rand eines Pflanzentopfes, wobei der Flansch (7) auf eine solche Weise mit dem Gegenstand verbunden ist, dass der Flansch auf dem Gegenstand in eine zweite freistehende Gleichgewichtsstellung gebracht werden kann, **dadurch gekennzeichnet, dass** der Flansch (7) in der ersten umgebogenen Stellung auf seiner Innenseite gegen ein vom Gegenstand vorstehendes Stützelement (5) anliegt.

2. Gegenstand (1) nach Anspruch 1, bei dem der Flansch (7) gegen das Stützelement (5) in einem Bereich anliegt, der halbwegs zwischen dem freien Rand und demjenigen Rand des Flansches angeordnet ist, der mit dem Gegenstand verbunden ist, oder in einem Bereich, der sich näher an demjenigen Rand des Flansches befindet, der mit dem Gegenstand verbunden ist.

3. Gegenstand nach Anspruch 1 oder 2, bei dem der Flansch (7) mit dem Gegenstand über eine Komponente (6) von geringerer Dicke, vorzugsweise von höchstens der halben Dicke des Flansches (7), verbunden ist.

4. Gegenstand (1) nach einem der vorangehenden Ansprüche, bei dem der Flansch (7) scharnierartig mit dem Gegenstand verbunden ist.

5. Gegenstand (1) nach einem der vorangehenden Ansprüche, bei dem der Flansch (7) mit dem Gegenstand durch ein Plattenelement verbunden ist, das gleichfalls vom Gegenstand vorsteht und das, wenn sich der Flansch in der ersten Stellung befindet, damit im Wesentlichen einen rechten Winkel einschließt.

6. Gegenstand (1) nach einem der vorangehenden Ansprüche, bei dem der Flansch (7) und fakultativ auch der Gegenstand von einer im Wesentlichen elliptischen, kreisförmigen, dreieckigen, rechtwinkligen oder polygonalen Form ist.

7. Gegenstand (1) nach einem der vorangehenden Ansprüche, bei dem der Flansch (7) sowohl in der ersten als auch der zweiten Stellung eine umgebogene Form aufweist.

## Revendications

1. Article (1) possédant une collerette (7) s'étendant autour d'au moins une partie de sa périphérie dans une première position, recourbée, par exemple le bord extérieur du plateau de collecte ou le bord supérieur d'un pot à plantes, ladite collerette (7) étant reliée à l'article de telle manière que ladite collerette peut être amenée dans une seconde position d'équilibre libre sur l'article, **caractérisé en ce que** ladite collerette (7) dans ladite première position recourbée s'appuie sur son intérieur contre un élément de support (5) en saillie de l'article.

2. Article (1) selon la revendication 1, dans lequel ladite collerette (7) s'appuie contre l'élément de support (5) dans une région qui est située à mi-chemin entre le bord libre et le bord de la collerette qui est relié à l'article, ou dans une région plus proche du bord de la collerette qui est relié à l'article.

3. Article selon la revendication 1 ou 2, dans lequel la collerette (7) est reliée à l'article via un composant (6) de plus faible épaisseur, de préférence d'épaisseur au plus égale à la moitié de l'épaisseur de la collerette (7).

4. Article (1) selon l'une des revendications précédentes, dans lequel la collerette (7) est reliée de manière articulée à l'article.

5. Article (1) selon l'une des revendications précédentes, dans lequel la collerette (7) est reliée à l'article par un élément de plaque qui de la même manière fait saillie de l'article et qui, lorsque la collerette est dans la première position, forme sensiblement un angle droit avec elle.

6. Article (1) selon l'une des revendications précédentes, dans lequel la collerette (7), et facultativement aussi l'article, est de forme sensiblement elliptique, circulaire, triangulaire, rectangulaire ou polygonale.

7. Article (1) selon l'une des revendications précédentes, dans lequel la collerette (7) a une forme recourbée à la fois dans les première et seconde positions.
